(19) Europäisches Patentamt
European Patent Office
Office européen des brevets

(11) **EP 3 505 413 B1**

(12) **EUROPEAN PATENT SPECIFICATION**

(45) Date of publication and mention
of the grant of the patent:
**05.01.2022 Bulletin 2022/01**

(21) Application number: **17843203.5**

(22) Date of filing: **29.06.2017**

(51) Int Cl.:
*B60W 20/00* (2016.01)       *B60K 6/365* (2007.10)
*B60K 6/445* (2007.10)       *B60W 30/18* (2012.01)
*B60W 10/06* (2006.01)       *B60W 10/08* (2006.01)
*B60W 50/00* (2006.01)

(86) International application number:
**PCT/JP2017/024037**

(87) International publication number:
**WO 2018/037715 (01.03.2018 Gazette 2018/09)**

(54) **HYBRID VEHICLE SYSTEM**

HYBRIDFAHRZEUGSYSTEM

SYSTÈME DE VÉHICULE HYBRIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.08.2016 JP 2016164755**

(43) Date of publication of application:
**03.07.2019 Bulletin 2019/27**

(73) Proprietors:
• **Kabushiki Kaisha Toshiba
Minato-ku
Tokyo 105-8001 (JP)**
• **Toshiba Infrastructure Systems &
Solutions Corporation
Kawasaki-shi, Kanagawa 212-0013 (JP)**

(72) Inventors:
• **SHIMIZU, Yosuke
Tokyo 105-8001 (JP)**
• **KUWANO, Yuuki
Tokyo 105-8001 (JP)**

(74) Representative: **AWA Sweden AB
Junkersgatan 1
582 35 Linköping (SE)**

(56) References cited:
JP-A- 2006 149 023    JP-A- 2010 172 139
JP-A- 2013 230 069    JP-A- 2016 088 381

**Description**

FIELD

An embodiment of the present invention relates to a hybrid vehicle system.

BACKGROUND

There is proposed a hybrid vehicle system configured to be capable of transmitting, to an axle, both energy supplied from an internal-combustion engine and energy supplied from a rechargeable battery.

A series-parallel hybrid vehicle system includes a three-axis power split mechanism that splits and supplies (distributes) energy supplied from an internal-combustion engine to a side of an electrical generator and a side of an axle. In the series-parallel hybrid vehicle system, the axle rotates by using the energy supplied from the internal-combustion engine via the three-axis power split mechanism, electrical energy supplied from the generator, and the energy supplied from a rechargeable battery.

In addition, in the series-parallel hybrid vehicle system, it is possible to individually determine a rotation speed of the axle (vehicle speed) and a rotation speed of the internal-combustion engine. In addition, in the series-parallel hybrid vehicle system, it is possible to individually determine output torque of the vehicle and an output of the internal-combustion engine. Consequently, regardless of a driving state of the vehicle, it is possible to determine an operation point of the internal-combustion engine. Therefore, an efficient start point is chosen as the operation point of the internal-combustion engine, and thereby it is possible to perform highly efficient operation of the internal-combustion engine and improve fuel efficiency.

In addition, in a case where there is a difference between output energy of the internal-combustion engine and output energy of the vehicle, it is possible to adjust energy overage and shortage through charge and discharge of a battery connected to a DC link.

CITATION LIST

PATENT DOCUMENT

[Patent Document 1] Japanese Patent No. 3050125

SUMMARY

For example, in a railroad vehicle, a friction force (adhesive force) due to rolling of wheels on a rail is defined as a drive force. The adhesive force of the railroad vehicle is smaller than a friction force between a tire of an automobile and a paved road surface. In particular, in a case where an upper limit of the friction force is low such as a state in which a rail or a wheel is wet, it is easy to cause slipping of the wheel.

In a case where the series-parallel hybrid vehicle system is mounted on the railroad vehicle, when the slipping of the wheel causes output energy of a motor to change, there is a possibility that DC link voltage will change and an inverter that drives the generator and the motor will be unstably controlled.

Further, in the system in which the battery is connected to the DC link, a charging current and a discharge current of the battery may be limited. Hence, in the system, when a charging/discharge current exceeding the limit flows, there is a possibility that the DC link voltage is likely to change significantly and the entire system will come to a stop.

The invention is defined by the appended claims.

An embodiment of the present invention is made in such a circumstance, and an object thereof is to provide a hybrid vehicle system that realizes stable drive.

A hybrid vehicle system according to an embodiment comprises an internal-combustion engine; a first electric motor; a three-axis power split mechanism that distributes power of the internal-combustion engine to the first electric motor and a power coupling mechanism; a second electric motor connected to the power coupling mechanism; an axle that is driven with energy that is supplied from the power coupling mechanism; a first inverter that drives the first electric motor; a second inverter that is connected to the first inverter via a DC link and drives the second electric motor; a rechargeable battery connected to the DC link; a first controller that computes a torque command of the first electric motor and a torque command of the second electric motor such that torque output from the axle is equal to an axle torque command supplied from outside; a second controller that receives a torque command difference from the axle torque command and computes a torque command difference of the first electric motor and a torque command difference of the second electric motor such that a difference between energy consumption of the first electric motor and energy consumption of the second electric motor is zero; a first adder that adds the torque command of the first electric motor and the torque command difference of the first electric motor so as to output obtained torque to the first inverter; and a second adder that adds the torque command of the second electric motor and the torque command difference of the second electric motor so as to output obtained torque to the second inverter.

BRIEF DESCRIPTION OF THE DRAWINGS

FIG. 1 is a diagram schematically showing a configurational example of a hybrid vehicle system of an embodiment.
FIG. 2 is a view for illustrating a configurational example of a three-axis power split mechanism of the hybrid vehicle system illustrated in FIG. 1.
FIG. 3 is a block diagram schematically showing a configurational example of a vehicle control device of the embodiment.

DETAILED DESCRIPTION

Hereinafter, a hybrid vehicle system of an embodiment will be described with reference to the drawings.
The hybrid vehicle system of the embodiment includes an internal-combustion engine 10, a three-axis power split mechanism 20, a generator (first electric motor) 30, a first inverter 40, a second inverter 50, a motor (second electric motor) 60, a power coupling mechanism 70, an axle 80, an auxiliary machine 90, a battery BT, a wheel WL, and a vehicle control device CTR.
The internal-combustion engine 10 is an engine such as a gasoline engine or a diesel engine which generates mechanical energy that drives a vehicle.
The three-axis power split mechanism 20 splits and supplies the mechanical energy generated by the internal-combustion engine 10 into energy supplied to a side of the generator 30 and energy supplied to a side of the wheel WL (side of the axle 80).

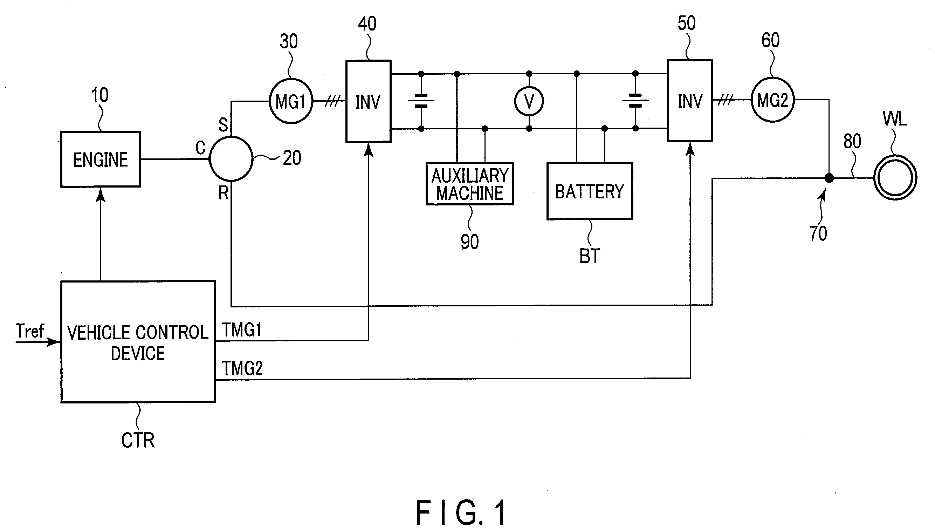

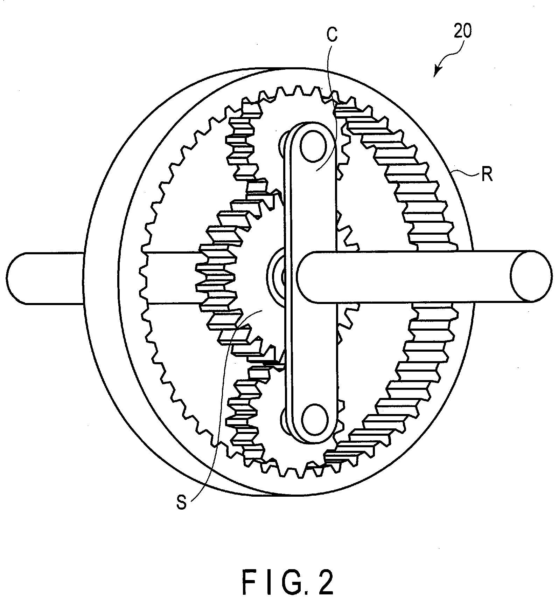

FIG. 2 is a view for illustrating a configurational example of the three-axis power split mechanism of the hybrid vehicle system illustrated in FIG. 1.
For example, the three-axis power split mechanism 20 includes a sun gear S, a planetary gear P that is in external contact with the sun gear S, a ring gear R with which the planetary gear P is in internal contact, and a planetary carrier C that rotates along a track of the planetary gear P. In the embodiment, the planetary carrier C rotates with mechanical energy Pe generated by the internal-combustion engine 10. Rotation power of the sun gear S is transmitted to the generator 30. Rotation power of the ring gear R is transmitted to the power coupling mechanism 70 connected to the axle 80.
An equation of motion of the sun gear S, the ring gear R, the planetary gear P, and the planetary carrier C of the three-axis power split mechanism 20 is as follows.
Note that $\theta$ represents a rotation angle of the gear, the electric motor, or the like, $\omega$ represents rotation angular velocity of the gear, the electric motor, or the like, T represents torque of the gear, the electric motor, or the like, J represents inertia of the gear, the electric motor, or the like, and G represents the number of teeth. In addition, regarding subscripts of the signs, S stands for the sun gear, P stands for the planetary gear, C stands for the planetary carrier, R stands for the ring gear.
[Formula 1]

$$J_S \ddot{\theta}_S = T_S + \lambda_1 \quad (1)$$

$$J_P \ddot{\theta}_P = \frac{G_P}{G_S} \lambda_1 - \frac{G_P}{G_R} \lambda_2 \quad (2)$$

$$J_C \ddot{\theta}_C = T_C - \frac{G_S + G_P}{G_S} \lambda_1 - \frac{G_R - G_P}{G_R} \lambda_2 \quad (3)$$

$$J_R \ddot{\theta}_R = T_R + \lambda_2 \quad (4)$$

Note that a constraint condition in the equation of motion is as follows.

[Formula 2]

$$G_S\theta_S + G_R\theta_R = (G_S + G_R)\theta_C \quad (5)$$

$\lambda_1$: Sun gear torque generated in the planet gear owing to other axis
$\lambda_2$: Ring gear torque generated in the planet gear owing to other axis

Here, assuming that inertia of the sun gear S, the internal-combustion engine 10, and the planetary gear P is negligibly small with respect to inertial mass of the vehicle, an equation of motion can be described as follows.
[Formula 3]

$$0 = T_S + \lambda_1 \quad (6)$$

$$0 = \frac{G_P}{G_S}\lambda_1 - \frac{G_P}{G_R}\lambda_2 \quad (7)$$

$$0 = T_C - \frac{G_S+G_P}{G_S}\lambda_1 - \frac{G_R-G_P}{G_R}\lambda_2 \quad (8)$$

The generator 30 converts mechanical energy Pg, which is supplied via the sun gear S of the power split mechanism 20, into electrical energy. For example, the generator 30 is an electric motor having a stator and a rotor interlocked with the sun gear S and outputs three-phase AC power.
The first inverter 40 is a control unit that controls an operation of the generator 30. The first inverter converts the three-phase AC power output from the generator 30 into DC power such that the generator performs a regenerative operation, and the first inverter 40 converts DC power that is supplied from a DC link into three-phase AC power so as to supplies the three-phase AC power to the generator 30 such that the generator 30 performs a power-running operation. The first inverter 40 is connected to the second inverter 50 and the battery BT via the DC link.
The second inverter 50 converts the DC power supplied from the DC link into AC power and outputs the AC power to a motor 60. In addition, the second inverter 50 converts the AC power supplied from the motor 60 into DC power and outputs the DC power to the DC link.
The motor 60 is an electric motor that is driven with AC power supplied from the second inverter 50 and converts electrical energy into mechanical energy Pm so as to output the mechanical energy to the power coupling mechanism 70.
The power coupling mechanism 70 transmits, to the axle 80, energy Pout obtained by coupling the mechanical energy Pg transmitted from the ring gear R of the internal-combustion engine 10 and the mechanical energy Pm supplied from the second inverter 50. The axle 80 is rotatably driven with energy supplied from the power coupling mechanism, and the wheel WL is rotatably driven via the axle 80.
For example, the battery BT is configured to include a rechargeable battery having a plurality of secondary battery cells, be rechargeable with electrical power that is supplied from the DC link, and be capable of discharging electrical power via the DC link.
The auxiliary machine 90 is a load such as a luminaire which is mounted in the vehicle. The auxiliary machine 90 is connected to the battery BT, the first inverter 40, and the second inverter 50 via the DC link and is driven with energy supplied from the DC link.
The vehicle control device CTR is a controller that performs control such that the internal-combustion engine 10, the generator 30, the first inverter 40, the second inverter 50, the motor 60, and the battery BT are operated in a linked manner to each other. For example, the vehicle control device CTR is a computing unit that includes a processor such as a central processing unit (CPU) or a micro processing unit (MPU) and a memory.

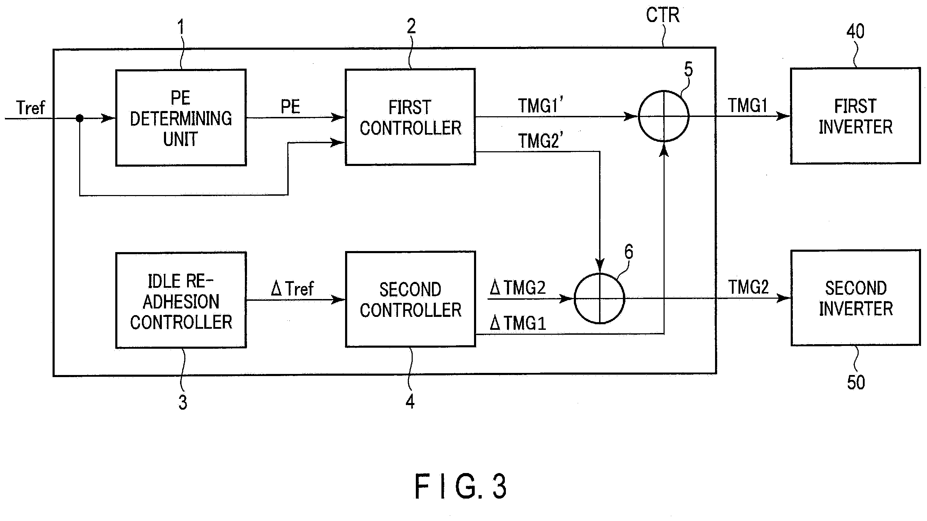

FIG. 3 is a block diagram schematically showing a configurational example of the vehicle control device of the embodiment.
Note that, as will be described below, a subscript of "E" is attached to a value related to the internal-combustion engine 10, a subscript of "MG1" is attached to a value related to the generator 30, and a subscript of "MG2" is attached to a value related to the motor 60.
The vehicle control device CTR includes a PE determining unit 1, a first controller 2, an anti-slip controller 3, a second controller 4, a first adder 5, and a second adder 6.
The PE determining unit 1 receives an axle torque command Tref from outside and computes and outputs output power $P_E$ of the internal-combustion engine 10, which corresponds to the axle torque command Tref. The PE determining unit 1 selects $P_E$ corresponding to an efficient operation point of the internal-combustion engine 10 when output torque of the vehicle system realizes a value of the axle torque command Tref by using a table, the equations, or the like stored in the memory in advance, for example.

The first controller 2 receives a value of the output power $P_E$ output from the PE determining unit 1 and the value of the axle torque command Tref and computes and outputs torque (torque command) $T_{MG1}'$ generated in the generator 30 and torque (torque command) $T_{MG2}'$ generated in the motor 60 when the output power $P_E$ of the internal-combustion engine 10 is obtained.

Here, in the vehicle system of the embodiment, output torque of the internal-combustion engine 10 becomes equal to torque Tc of the carrier C of the power split mechanism 20. In addition, the generator 30 is connected to the sun gear S of the power split mechanism 20, and thus output torque of the sun gear S is equal to the torque $T_{MG1}'$ of the generator 30, as shown in the following Equation (9).

[Formula 4]

$$T_S = T_{MG1}' \quad (9)$$

When Equation (7) is changed by using the above-described Equation (9) and Equation (6) described above, the following Equation (10) is obtained.

[Formula 5]

$$\frac{T_{MG1}'}{G_S} + \frac{\lambda_2}{G_R} = 0 \quad (10)$$

Torque $T_{OUT}$ of the axle is a total of torque $\lambda_2$ generated in the ring gear R of the power split mechanism 20 and the torque $T_{MG2}'$ generated in the motor 60. Hence, it is possible to obtain the following Equation (11) by using the above-described Equation (10).

[Formula 6]

$$T_{OUT} = \lambda_2 + T_{MG2}$$
$$= -\frac{G_R}{G_S} T_{MG1}' + T_{MG2}' \quad (11)$$

When the gears of the power split mechanism 20 rotate at a constant speed, torque generated in the internal-combustion engine (carrier) 10 can be expressed as the following Equation (12) from the above-described Equations (6), (8), and (9).

[Formula 7]

$$T_C = \frac{G_S + G_P}{G_S}(-T_{MG1}') + \frac{G_R - G_P}{G_R}\lambda_2 \quad (12)$$

Further, when the above-described Equation (12) is changed by a relationship of the above-described Equation (10), it is possible to obtain the following Equation (13).

[Formula 8]

$$T_C = \frac{G_S + G_P}{G_S}(-T_{MG1}') + \frac{G_R - G_P}{G_R}\left(-\frac{G_R}{G_S} T_{MG1}'\right)$$
$$= -\frac{G_S + G_R}{G_S} T_{MG1}' \quad (13)$$

The above-described Equation (13) shows that load torque Tc of the internal-combustion engine 10 is determined by the torque $T_{MG1}'$ generated in the generator 30. Hence, it is possible to compute the output power $P_E$ of the internal-combustion engine 10 by using the above-described Equation (13) as follows.

[Formula 9]

$$P_E = \omega_C T_C = \omega_C \left( -\frac{G_S + G_R}{G_S} T_{MG1}{}' \right) \quad (1\,4)$$

$$\omega_C = \frac{G_S \omega_S + G_R \omega_R}{G_S + G_R} \quad (1\,5)$$

$$P_E = \frac{G_S \omega_S + G_R \omega_R}{G_S + G_R} \left( -\frac{G_S + G_R}{G_S} T_{MG1}{}' \right)$$
$$= -\frac{G_S \omega_S + G_R \omega_R}{G_S} T_{MG1}{}' \quad (1\,6)$$

From the above-described Equation (16), the torque $T_{MG1}{}'$ generated in the generator 30 in order for the internal-combustion engine to output power $P_E$ can be expressed as the following Equation (17).
[Formula 10]

$$T_{MG1}{}' = -\frac{G_S P_E}{G_S \omega_{MG1} + G_R \omega_R} \quad (1\,7)$$

In addition, the first controller 2 performs control such that the output torque $T_{OUT}$ of the axle 80 becomes equal to the axle torque command Tref, and thus the torque $T_{MG2}{}'$ generated in the motor 60 can be expressed as the following Equation (18) by using Equations (11) and (17) as described above.
[Formula 11]

$$T_{MG2}{}' = T_{ref} - \frac{G_R}{G_S} T_{MG1}{}'$$
$$= T_{ref} + \frac{G_R P_E}{G_S \omega_{MG1} + G_R \omega_R} \quad (1\,8)$$

In other words, the first controller 2 computes the torque $T_{MG1}{}'$ generated in the generator 30 when the axle torque command Tref is realized, by using the above-described Equation (17) and the value of the output power $P_E$ of the internal-combustion engine 10. In addition, the first controller 2 computes the torque $T_{MG2}{}'$ generated in the motor 60 when the axle torque command Tref is realized, by using the above-described Equation (18), the value of the axle torque command Tref, and a value of torque $T_{MG1}{}'$.

The anti-slip controller 3 performs re-adhesion control for lowering the output torque $T_{OUT}$ of the axle 80 when slipping of the wheel is detected. For example, the anti-slip controller 3 observes a speed, acceleration, or the like of the vehicle, determines that slipping occurs when values thereof exceed predetermined threshold values thereof, and outputs a difference (torque command difference) ΔTref from the axle torque command Tref supplied to the vehicle control device CTR from outside. Note that a unit that detects the slipping may be provided outside the vehicle control device CTR. In this case, the anti-slip controller 3 receives a notification indicating that the slipping is detected and outputs the difference ΔTref of a torque command based on the notification.

The second controller 4 receives the difference ΔTref of the torque command and computes a torque change amount $\Delta T_{MG1}$ of the generator 30 and a torque change amount $\Delta T_{MG2}$ of the motor 60 so as to realize the difference ΔTref of the torque command and control a voltage change of the DC link.

As will be expressed in the following Equation (19), a sum of energy consumed by the generator 30, energy consumed by the motor 60, and energy $P_{DC}$ consumed by the battery BT, the auxiliary machine 90, or the like via the DC link is zero.
[Formula 12]

$$\omega_S T_{MG1} + \omega_R T_{MG2} + P_{DC} = 0 \quad (1\,9)$$

Here, in a case where values of respective terms are negative, the generator 30 and the motor 60 is in a state of generating electricity, and the battery BT is in a state of being charged.

From the above-described Equations (17), (18), and (19), when the output power $P_E$ of the internal combustion engine 10 is varied by the difference ΔTref in the output torque $T_{OUT}$ of the axle 80 without changing the drive efficiency of the internal combustion engine 10, only the torque generated in the motor 60 is changed, and as a result, the energy $P_{DC}$ is changed. For example, in a case where a steep change of the output torque $T_{OUT}$ is assumed as in the anti-slip control, the energy $P_{DC}$ steeply changes. As a result, a charge/discharge current of the battery BT steeply changes. The battery BT has internal resistance, and thus a value of the internal resistance changes depending on a temperature or the like. In a state in which the internal resistance of the battery BT is high, DC link voltage steeply changes in connection with the change of the charge/discharge current of the battery BT. When the DC link voltage changes, there is a concern that control of the first inverter 40 and the second inverter 50 will be unstable.

In this respect, in the embodiment, the second controller 4 computes the torque $\Delta T_{MG1}$ of the generator 30 and the torque $\Delta T_{MG2}$ of the motor 60 so as to control the change of the energy $P_{DC}$.

In other words, the second controller 4 receives the torque command difference ΔTref from the axle torque command Tref and computes and outputs the torque command difference $\Delta T_{MG1}$ of the generator 30 (first electric motor) and the torque command difference $\Delta T_{MG2}$ of the motor 60 (second electric motor) such that the difference between energy consumption of the generator 30 (first electric motor) and energy consumption of the motor 60 (second electric motor) is zero.

From the above Equations (11) and (19), the energy $P_{DC}$ consumed by the DC link does not change, but torque of the generator 30 and the motor 60 is obtained to obtain the necessary output torque $T_{OUT}$ of the vehicle.
[Formula 13]

$$T_{MG1} = \frac{G_S(-\omega_R T_{out} - P_{DC})}{G_S \omega_S + G_R \omega_R} \qquad (20)$$

$$T_{MG2} = \frac{G_S\left(\omega_S T_{out} - \frac{G_R}{G_S} P_{DC}\right)}{G_S \omega_S + G_R \omega_R} \qquad (21)$$

Here, there is considered a case in which the axle torque $T_{OUT}$ is changed only by the difference ΔTref.

In this case, the torque change amount $\Delta T_{MG1}$ of the generator 30 and the torque change amount $\Delta T_{MG2}$ of the motor 60 can be expressed as the following Equations (22) and (23) from the above-described Equations (20) and (21).
[Formula 14]

$$\Delta T_{MG1} = -\frac{G_S \omega_R \Delta T_{ref}}{G_S \omega_S + G_R \omega_R} \qquad (22)$$

$$\Delta T_{MG2} = \frac{G_S \omega_S \Delta T_{ref}}{G_S \omega_S + G_R \omega_R} \qquad (23)$$

In other words, the second controller 4 computes the torque change amount $\Delta T_{MG1}$ of the generator 30 from the above-described Equation (22) by using the difference ΔTref of the torque command. In addition, the second controller 4 computes the torque change amount $\Delta T_{MG2}$ of the motor 60 from the above-described Equation (23) by using the difference ΔTref of the torque command.

The first adder 5 adds the torque $T_{MG1}$' output from the first controller 2 and the torque change amount $\Delta T_{MG1}$ output from the second controller 4 and outputs the torque $T_{MG1}$ of the generator 30 to the first inverter 40.

The second adder 6 adds the torque $T_{MG2}$' output from the first controller 2 and the torque change amount $\Delta T_{MG2}$ output from the second controller 4 and outputs the torque $T_{MG2}$ of the motor 60 to the second inverter 50.

In other words, the torque $T_{MG1}$ and the torque $T_{MG2}$ can be expressed as the following Equations (24) and (25).
[Formula 15]

$$T_{MG1} = -\frac{G_S P_E}{G_S \omega_{MG1} + G_R \omega_R} - \frac{G_S \omega_R \Delta T_{ref}}{G_S \omega_S + G_R \omega_R} \qquad (24)$$

$$T_{MG2} = T_{ref} + \frac{G_R P_E}{G_S \omega_{MG1} + G_R \omega_R} + \frac{G_S \omega_S \Delta T_{ref}}{G_S \omega_S + G_R \omega_R} \qquad (25)$$

The first inverter 40 and the second inverter 50 supply a drive current to the generator 30 and the motor 60 such that the torques $T_{MG1}$ and $T_{MG2}$ supplied from the vehicle control device CTR are realized.

As described above, when the generator 30 and the motor 60 are driven, the output torque $T_{OUT}$ of the axle 80 is obtained in a relationship of $T_{OUT}$ = Tref + ∆Tref, and it is possible to control the change of the DC link voltage.

In other words, according to the embodiment, it is possible to provide the hybrid vehicle system that realizes stable drive.

Note that, in the embodiment described above, the axle torque command Tref that is supplied from outside and the difference ∆Tref of the torque command are individually used; however, the axle torque command Tref that is supplied from outside may be a value obtained by adding the difference ∆Tref thereto in advance, for example. In this case, for example, the vehicle control device CTR includes a unit that separates a component Tref1 indicating a gentle change of the axle torque command Tref from a component Tref2 indicating a steep change thereof, supplies the component Tref1 indicating the gentle change to the first controller 2, and supplies the component Tref2 indicating the steep change to the second controller 4.

For example, the control device CTR applies a filter (a change rate limit, a primary delay, or the like) to the axle torque command Tref that is input from outside and set an output of the filter as the component Tref1 that is supplied to the first controller 2. Further, the component Tref2 that is a difference between the axle torque command Tref and the component Tref1 is supplied to the second controller 4. A parameter (a change rate limit value, a constant during the primary delay, or the like) of the filter when the component Tref1 is separated from the axle torque command Tref changes depending on responsiveness of the control of the electric motor by the vehicle system or the inverters 40 and 50 to be used. However, the parameter is set to a value with which a torque change of the component Tref1 is 10%/100 ms or lower when the maximum torque of the generator 30 and the motor 60 is 100%, for example.

As described above, when separation of the axle torque command Tref is performed by using the filter, it is possible to control a change in DC link voltage with respect to the torque change component when there is a steep change in the axle torque command, regardless of the change of the axle torque command depending on the anti-slip control. As a result, it is possible to provide the hybrid vehicle system that realizes stable drive.

In addition, in a case where a high current is difficult to flow to the battery BT such as when the battery BT is in a very high temperature state, the output torque $T_{OUT}$ of the axle may be entirely set as the torque component Tref2 indicating the steep change. In other words, the torque component Tref1 indicating the gentle change of the torque command is set to zero, and the torque component Tref2 indicating the steep change is equal to $T_{OUT}$ (= Tref). In this manner, it is possible to control the current that flows to the battery BT.

**Claims**

1. A hybrid vehicle system comprising:

   an internal-combustion engine (10);
   a first electric motor (30);
   a three-axis power split mechanism (20) that distributes power of the internal-combustion engine (10) to the first electric motor (30) and a power coupling mechanism (70);
   a second electric motor (60) connected to the power coupling mechanism (70);
   an axle (80) that is driven with energy that is supplied from the power coupling mechanism (70);
   a first inverter (40) that drives the first electric motor (30);
   a second inverter (50) that is connected to the first inverter (40) via a DC link and drives the second electric motor (60);
   a rechargeable battery (BT) connected to the DC link;
   an anti-slip controller (3) that outputs a torque command difference (∆Tref) such that output torque of the axle (80) is lowered when slipping of a wheel (WL) that rotates with power from the axle (80) is detected;
   a first controller (2) that computes a torque command ($T_{MG1}$') of the first electric motor and a torque command ($T_{MG2}$') of the second electric motor such that torque output from the axle (80) is equal to an axle torque command (Tref);
   a second controller that receives the torque command difference (∆Tref) and computes a torque command difference ($\Delta T_{MG1}$) of the first electric motor (30) and a torque command difference ($\Delta T_{MG2}$) of the second electric motor (60) such that a difference between energy consumption of the first electric motor (30) and energy consumption of the second electric motor (60) is zero;
a first adder (5) that adds the torque command ($T_{MG1}$') of the first electric motor (30) and the torque command difference ($\Delta T_{MG1}$) of the first electric motor (30) so as to output obtained torque to the first inverter (40); and
a second adder (6) that adds the torque command ($T_{MG2}$') of the second electric motor (60) and the torque command difference ($\Delta T_{MG2}$) of the second electric motor so as to output obtained torque to the second inverter (50).

**2.** The hybrid vehicle system according to claim 1,

wherein the three-axis power split mechanism has a planetary carrier that rotates with energy generated by the internal-combustion engine, a sun gear that transmits rotation power to the first electric motor, and a ring gear that transmits rotation power to the power coupling mechanism,
wherein the torque command difference of the first electric motor is a negative value of a value obtained by dividing a product of the number of the sun teeth, rotation angular velocity of the ring gear, and the torque command difference by a sum of a product of the number of sun teeth and rotation angular velocity of the sun gear and a product of the number of ring teeth and the rotation angular velocity of the ring gear, and
wherein the torque command difference of the second electric motor is a value obtained by dividing a product of the number of the sun teeth, the rotation angular velocity of the sun gear, and the torque command difference by a sum of the product of the number of sun teeth and the rotation angular velocity of the sun gear and the product of the number of ring teeth and the rotation angular velocity of the ring gear.


**Patentansprüche**

**1.** Hybridfahrzeugsystem, das umfasst:

einen Verbrennungsmotor (10);
einen ersten Elektromotor (30);
einen dreiachsigen Leistungsteilungsmechanismus (20), der Leistung des Verbrennungsmotors (10) an den ersten Elektromotor (30) und einen Leistungskopplungsmechanismus (70) verteilt;
einen zweiten Elektromotor (60), der mit dem Leistungskopplungsmechanismus (70) verbunden ist;
eine Achse (80), die mit Energie angetrieben wird, die von dem Leistungskopplungsmechanismus (70) geliefert wird;
einen ersten Wechselrichter (40), der den ersten Elektromotor (30) antreibt;
einen zweiten Wechselrichter (50), der mit dem ersten Wechselrichter (40) über eine Gleichstromverbindung verbunden ist und den zweiten Elektromotor (60) antreibt;
eine wiederaufladbare Batterie (BT), die mit der Gleichstromverbindung verbunden ist;
eine Antischlupfsteuerung (3), die eine Drehmoment-Befehlsdifferenz ($\Delta$Tref) ausgibt, derart dass Ausgangsdrehmoment der Achse (80) vermindert wird, wenn der Schlupf eines Rades (WL), das sich mit Leistung von der Achse (80) dreht, festgestellt wird;
eine erste Steuerung (2), die einen Drehmomentbefehl ($T_{MG1}$') des ersten Elektromotors und einen Drehmomentbefehl ($T_{MG2}$') des zweiten Elektromotors derart berechnet, dass Drehmoment, das von der Achse (80) abgegeben wird, gleich einem Achsendrehmomentbefehl (Tref) ist;
eine zweite Steuerung, die die Drehmoment-Befehlsdifferenz ($\Delta$Tref) empfängt und eine Drehmoment-Befehlsdifferenz ($\Delta T_{MG1}$) des ersten Elektromotors (30) und eine Drehmoment-Befehlsdifferenz ($\Delta T_{MG2}$) des zweiten Elektromotors (60) derart berechnet, dass eine Differenz zwischen dem Energieverbrauch des ersten Elektromotors (30) und dem Energieverbrauch des zweiten Elektromotors (60) null ist;
einen ersten Addierer (5), der den Drehmomentbefehl ($T_{MG1}$') des ersten Elektromotors (30) und die Drehmoment-Befehlsdifferenz ($\Delta T_{MG1}$) des ersten Elektromotors (30) derart addiert, dass erhaltenes Drehmoment an den ersten Wechselrichter (40) ausgegeben wird; und
einen zweiten Addierer (6), der den Drehmomentbefehl ($T_{MG2}$') des zweiten Elektromotors (60) und die Drehmoment-Befehlsdifferenz ($\Delta T_{MG2}$) des zweiten Elektromotors derart addiert, dass erhaltenes Drehmoment an den zweiten Wechselrichter (50) ausgegeben wird.

**2.** Hybridfahrzeugsystem nach Anspruch 1,

wobei der dreiachsige Leistungsteilungsmechanismus einen Planetenträger, der sich mit von dem Verbrennungsmotor erzeugter Energie dreht, ein Sonnenrad, das Drehleistung auf den ersten Elektromotor überträgt, und ein Tellerrad aufweist, das Drehleistung auf den Leistungskopplungsmechanismus überträgt,
wobei die Drehmoment-Befehlsdifferenz des ersten Elektromotors ein negativer Wert eines Werts ist, der durch Dividieren eines Produkts der Anzahl der Sonnenzähne, der Drehwinkelgeschwindigkeit des Tellerrades und der von außerhalb gelieferten Drehmoment-Befehlsdifferenz durch eine Summe eines Produkts der Anzahl der Sonnenzähne und der Drehwinkelgeschwindigkeit des Sonnenrades und eines Produkts der Anzahl der Tellerzähne und der Drehwinkelgeschwindigkeit des Tellerrades erhalten wird, und
wobei die Drehmoment-Befehlsdifferenz des zweiten Elektromotors ein Wert ist, der durch Dividieren eines Produkts der Anzahl der Sonnenzähne, der Drehwinkelgeschwindigkeit des Sonnenrades und der von außerhalb gelieferten Drehmoment-Befehlsdifferenz durch eine Summe des Produkts der Anzahl der Sonnenzähne und der Drehwinkelgeschwindigkeit des Sonnenrades und des Produkts der Anzahl der Tellerzähne und der Drehwinkelgeschwindigkeit des Tellerrades erhalten wird.

## Revendications

1. Système de véhicule hybride comprenant :

   un moteur à combustion interne (10) ;
   un premier moteur électrique (30) ;
   un mécanisme de dérivation de puissance à trois axes (20) qui distribue une puissance du moteur à combustion interne (10) au premier moteur électrique (30) et à un mécanisme de couplage de puissance (70) ;
   un deuxième moteur électrique (60) relié au mécanisme de couplage de puissance (70) ;
   un essieu (80) qui est entraîné avec une énergie qui est fournie depuis le mécanisme de couplage de puissance (70) ;
   un premier inverseur (40) qui entraîne le premier moteur électrique (30) ;
   un deuxième inverseur (50) qui est relié au premier inverseur (40) via une liaison CC et qui entraîne le deuxième moteur électrique (60) ;
   une batterie rechargeable (BT) reliée à la liaison CC ;
   un dispositif de commande d'antipatinage (3) qui délivre une différence de commande de couple ($\Delta$Tref) de sorte qu'un couple de sortie de l'essieu (80) soit réduit lorsqu'un patinage d'une roue (WL) qui tourne avec une puissance provenant de l'essieu (80) est détecté ;
   un premier dispositif de commande (2) qui calcule une commande de couple ($T_{MG1'}$) du premier moteur électrique et une commande de couple ($T_{MG2'}$) du deuxième moteur électrique de sorte qu'une sortie de couple depuis l'essieu (80) soit égale à une commande de couple d'essieu (Tref) ;
   un deuxième dispositif de commande qui reçoit la différence de commande de couple ($\Delta$Tref) et calcule une différence de commande de couple ($\Delta T_{MG1}$) du premier moteur électrique (30) et une différence de commande de couple ($\Delta T_{MG2}$) du deuxième moteur électrique (60) de sorte qu'une différence entre une consommation d'énergie du premier moteur électrique (30) et une consommation d'énergie du deuxième moteur électrique (60) soit zéro ;
   un premier additionneur (5) qui additionne la commande de couple ($T_{MG1'}$) du premier moteur électrique (30) et la différence de commande de couple ($\Delta T_{MG1}$) du premier moteur électrique (30) de manière à délivrer un couple obtenu au premier inverseur (40) ; et
   un deuxième additionneur (6) qui additionne la commande de couple ($T_{MG2'}$) du deuxième moteur électrique (60) et la différence de commande de couple ($\Delta T_{MG2}$) du deuxième moteur électrique de manière à délivrer un couple obtenu au deuxième inverseur (50).

2. Système de véhicule hybride selon la revendication 1,

   dans lequel le mécanisme de dérivation de puissance à trois axes a un porte-planétaire qui tourne avec une énergie générée par le moteur à combustion interne, une roue solaire qui transmet une puissance de rotation au premier moteur électrique, et une couronne dentée qui transmet une puissance de rotation au mécanisme de couplage de puissance,
   dans lequel la différence de commande de couple du premier moteur électrique est une valeur négative d'une valeur obtenue en divisant un produit du nombre de dents solaires, de la vitesse angulaire de rotation de la couronne dentée et de la différence de commande de couple fournie de l'extérieur par une somme d'un produit du nombre de dents solaires et de la vitesse angulaire de rotation de la roue solaire et d'un produit du nombre de dents de couronne et de la vitesse angulaire de rotation de la couronne dentée, et
   dans lequel la différence de commande de couple du deuxième moteur électrique est une valeur obtenue en divisant un produit du nombre de dents solaires, de la vitesse angulaire de rotation de la roue solaire et de la différence de commande de couple fournie de l'extérieur par une somme du produit du nombre de dents solaires et de la vitesse angulaire de rotation de la roue solaire et du produit du nombre de dents de couronne et de la vitesse angulaire de rotation de la couronne dentée.

F I G. 1

FIG. 2

F I G. 3

EP 3 505 413 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3050125 B